# EUROPEAN PATENT SPECIFICATION

(11) **EP 3 284 879 B1**
(45) Date of publication and mention of the grant of the patent: **10.07.2019**
(21) Application number: 16779388.4
(22) Date of filing: 14.04.2016
(51) Int. Cl.: E04G 21/02, E04G 21/04, C04B 28/00, C04B 40/00

(54) **CONCRETE CONSTRUCTION TECHNIQUE CAPABLE OF CONTROLLING SETTING TIME AND SPECIAL EQUIPMENT THEREFOR**
BETONBAUVERFAHREN ZUR STEUERUNG DER ABBINDEZEIT UND SPEZIELLE AUSRÜSTUNG DAFÜR
TECHNIQUE DE CONSTRUCTION EN BÉTON CAPABLE DE COMMANDER LE TEMPS DE PRISE ET ÉQUIPEMENT PARTICULIER POUR CELLE-CI

(30) Priority: 17.04.2015 CN 201510183147
(43) Date of publication of application: 21.02.2018
(73) Proprietor: Zhang, Pengcheng, Chongqing 401147 (CN)
(72) Inventor: CHEN, Ke, Chongqing 401147 (CN); WANG, Yongwei, Chongqing 401147 (CN); LIU, Yawen, Chongqing 401147 (CN)
(74) Representative: Hirsch & Partners
(86) International application number: PCT/CN2016/000200
(87) International publication number: WO 2016/165413

(56) References cited:
- WO-A1-90/12834
- WO-A2-2011/068830
- CN-A- 101 280 628
- CN-A- 103 600 407
- CN-A- 103 967 276
- CN-A- 104 191 494
- CN-A- 104 878 935
- CN-U- 204 054 287
- JP-A- 2003 206 508

## Description

### Field of Invention

The present invention defines a setting time controlled concrete construction method and a dedicated equipment for 3D printing concrete forming and suitable for performing the above method.

### Description of related art

The human survival and development history is also a history of various material. The constructional material is continuously updating and developing together with the development of mankind. Concrete material features excellent performance like good plasticity before setting and good mechanical performance and durability after setting. Therefore, the concrete is mostly applied constructional material by now, and it is the prior basic material for all foundation facilities. According to different cementitious material, concrete is divided into different types, like silicate cement concrete, alkali slag concrete, sulphoaluminate concrete, phosphate concrete, etc., these concrete materials have similar technical performance.

3D printing building offers new method for future structures. 3D printing building forms required building structure by stacking concrete "ink" in layers. The performance of concrete ink decides the construction quality and progress of 3D building printing, especially the concrete ink setting time and mechanical performance. Concrete ink is the core technology in existing 3D building printing and its formula and construction method were not made public. To assure setting time of concrete in 3D printing building, usually we predict a fixed setting time and add fixed proportion of cementitious material in concrete according to construction schedule, once the concrete with fixed proportion of cementitious material was mixed, the setting time may not be easily changed. The patent document "A 3D Printing Method for Building Component" (Application No. CN 201310697608.X) introduces a method to shorten setting time by using hot steam to heat the concrete, though this method may shorten the setting time, the effect was flow and the controllable setting time range is limited, and is greatly influenced by ambient temperature, it still cannot solve the technical problem of controlling setting time of concrete.

As the current method of adjusting the concrete setting time is to add a certain amount of early strength agent, quick-setting agent or retarder and other additives in the concrete, so to adjust the setting time by changing the composition and dosage of the additives. The problem is once the mixing ratio of the concrete is confirmed, the setting and hardening time is basically determined, it's hard for the prepared concrete to keep good fluidity and long setting time for agitation and delivery while quick setting; Besides, in one patent application of the Applicant, "Setting time controlled Alkali Activated Cementitious Material, Control Method and Application" (Patent Application No. CN 2015100322160), a technology was introduced to control the concrete setting time by applying applied electric field to concrete containing alkali activated cementitious material after casting and forming. This technology applies in adjusting and controlling concrete setting time after forming, it is not suitable for controlling concrete setting time before or during forming process, furthermore, it is not suitable for 3D printing concrete technology, which requires controlling concrete setting time during forming.

The document CN 103600407 A discloses a device for 3D printing according to the preamble of claims 1 and 4.

### Summary of present invention

The technical problem to be solved in technical solution of present invention is the defect of unable to adjust/control concrete setting time after confirmation of material and the defect of adjust/control setting time after concrete forming existed in above said technical solution of adjusting the concrete setting time is to add a certain amount of early strength agent, quick-setting agent or retarder and other additives in the concrete, so to adjust the setting time by changing the composition and dosage of the additives. The applicant suggests a new setting time controlled concrete construction method and dedicated equipment, so to realize changing concrete setting time per need during construction. On one hand, it may satisfy the demand of adjusting/controlling concrete setting time before forming, on the other hand, it keeps prepared concrete in good fluidity and relatively long setting time before forming to meet the requirements for agitation and delivery, in the same time, it may quickly adjust setting time to improve the early strength of concrete and rationally improve construction efficiency.

The present invention provides a construction method for controlling the setting time of alkali-activated cementitious material at the time of extrusion.

The present invention also provides a dedicated equipment for 3D concrete printing which can perform the above construction method.

The present invention provides a setting time controlled concrete construction method, according to claim 1, at least including the following steps:
First step, mixing, to mix the raw materials of said concrete with suitable water and aggregate evenly into concrete mixture, the concrete raw materials comprise at least a cementitious material comprising activator and pulverized silicon aluminum oxide contained active material;
Second step, pumping, to pump the concrete mixture by a delivery pump to an extrusion device via delivery pipeline;
Third step, extruding, to extrude the concrete mixture through an extruding opening;
Fourth step, forming, to form constructional components of required size and shape with the extruded mixture;
Fifth step, coagulating and hardening, to coagulate and to harden the constructional components;
Between the second step of pumping and the third step of extruding, there is an electric treatment step by an applied electric field to the concrete mixture, the mixture subjected to the electric treatment by the applied electric field will be extruded immediately through an extruding opening.

In the above concrete construction method, an electric treatment step with applied electric field to concrete mixture was added, this electric treatment step with applied electric field may quicken the hydration speed of cementitious material in concrete, control setting time, so it may adjust and control the setting time of concrete at any time before forming. Compare with the technical solution of advance setting of early strength agent, quick-setting agent or retarder and other additives in the concrete, so to adjust the setting time by changing the composition and dosage of the additives, this solution may better satisfy the constructional performance requirements for agitation and delivery. Mixture subjected to the electric treatment by the applied electric field will be extruded from extrusion device immediately. Besides, the voltage of the applied electric field can be adjusted according to forming time and extrusion speed, different voltage adjustment may control the setting time of concrete, comparing with existing water steam process, the voltage adjustment control is simpler and the adjustable range is wider, in the same time, it may satisfy the demand for adjusting/controlling concrete setting time according to time line of forming prior to concrete forming, this is a dynamic adjustable technology used before concrete forming, it may be applied not only in 3D printing concrete forming but also in normal concrete forming technology.

Furthermore, the activator shall be a mixture comprises at least one or more of sodium hydroxide, potassium hydroxide, sodium carbonate, potassium carbonate and water glass. The mixed solution in the mixture formed by mixing the above-mentioned alkali-activated cementitious material with the mixing water is a strongly alkaline solution, which has extremely high hydroxide ion concentration, it is a good conductor, with the ability to convert electrical energy into heat to increase the temperature of the mixture and speed up the hydration reaction speed of cementitious materials. Under the action of the applied electric field, the hydroxide ions temporarily enriched on surface of the solid particles, increases the concentration of local reactants, and further promote the hydration reaction. In addition, the hydration process of the alkali-activated cementitious material is an exothermic reaction. The faster the hydration rate is, the more heat is released and the higher the temperature of the mixture is. Therefore, under the role of applied electric field, a hydration environment with positive feedback of hydration speed and temperature is formed in activator mixture containing above mentioned alkali activated cementitious material, the rapid forming of hydration presented as coagulation and hardening of the mixture. By adding an electric field, the temperature and electric field gradient in the alkali-activated cementitious material mixture can be changed to control the hydration speed and hydration progress, thus controlling the setting time.

Furthermore, the pulverized silicon aluminum oxide contained active material refers to a pulverized material from high temperature treatment or from high temperature processing phase, with major chemical content of silicon aluminum oxide, comprises at least mixture of one or more contents like granulated blast furnace slag powder, ground steel slag, Bayer process red mud, fly ash, ground slag, ground calcined clay minerals, phosphate slag powder, ground calcined coal gangue, ground calcined shale.

Furthermore, it is defined that the mass composition of cementitious material is: pulverized silicone aluminum oxide contained active material 60-80 portion, activator calculated by Na2O+0.658K2O, 2-16 portion, water reducing agent 0-10 portion, retarder 0-10 portion, expansion agent 0-10 portion, admixture 0-40 portion.

In this technical solution, the applied electric field is defined as AC power.

A further object of the present invention, is a dedicated equipment according to claim 4, which performs a 3D concrete printing and is configured for performing setting time controlled concrete construction method, the equipment comprises at least a delivery pump, a delivery pipeline, an extrusion device. The extrusion device comprises electric a treatment device and an extrusion port, the electric treatment device is connected with said delivery pipeline, the extrusion port is located behind the electric treatment device, which has at least one set of electrodes connecting with said concrete mixture, after electrified there is a voltage difference between electrodes. The delivery pump is the equipment providing power to pressurize mixture, pumping and extrusion. The delivery pipeline indicates the pipe between the delivery pump and electric treatment device that may sustain certain pressure. The electric treatment device is used to provide applied electric field and form current to mixture passing this equipment. The extrusion port is an opening allowing extrusion of mixture after electrically treated. The extrusion port can be a section of short pipe with opening arranged independently after electric treatment device, or a pipe opening behind rear end of electric treatment device, it is used only to extrude the mixture after electric treatment.

The equipment also comprises at least one set of electrodes in contact with concrete mixture, the electric field formed between electrodes after electrified, and forms alternating current to mixture flow through this equipment, the applied electric field may quicken the hydration speed of cementitious material and control setting time, so to realize the setting time controlled concrete construction method.

It is further defined that the insulated pipes ware used on outer wall of the electric treatment device, and the matching electrodes are arranged inside the insulated pipes. Now the electrodes and the concrete is contacted, insulated pipe used on outer wall of electric treatment device may guarantee no short circuit or leakage of electric field when electrodes are electrified, matching electrodes are arranged inside pipe and the electrodes are contact with concrete to assure current occurs between electrodes through mixture when electrodes are electrified.

Furthermore, the set of electrodes of the electric treatment equipment comprises 2 or 3 electrodes, current occurs between electrodes through mixture. Since the current between electrodes passes through mixture, when arranged evenly, it may stably control the hydration speed of cementitious material in concrete passing through electric treatment device, and is capable of guarantying stable realization of concrete construction method.

### Description of figures:

Fig. 1 illustrates a flow chart of the setting time controlled concrete construction method;
Fig. 2 illustrates the composition diagram of the dedicated equipment for the setting time controlled concrete construction method; the arrow shows the flow direction of the mixture.
Fig. 3 illustrates the M-M section view of Fig. 2 when adopting electrode A and B as one set of electrodes;
Fig. 4 illustrates the M-M section view of Fig. 2 when adopting electrode A, B and C as one set of electrodes.
Fig. 5 illustrates the M-M section view of Fig. 2 when adopting electrode A and B as one set of electrodes in another form;

### Detailed implementation:

Present invention will be described below by way of implementation, the scope of protection of the present invention being limited by the appended claims.

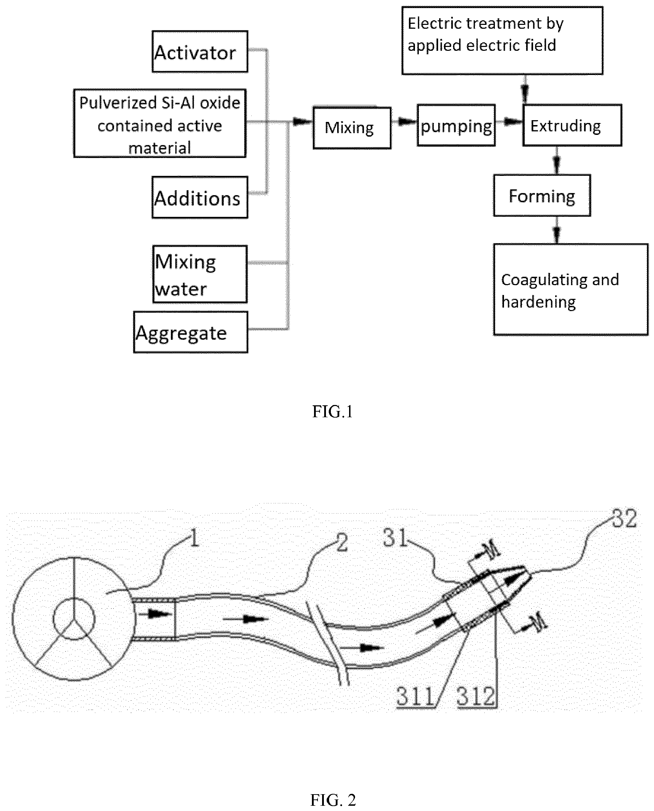

As illustrated in Fig. 1, present invention defines a setting time controlled concrete construction method, including following steps:
First step, mixing raw materials of said concrete with suitable amount of water and aggregate evenly into concrete mixture, said concrete raw materials comprises at least a cementitious material comprising activator and pulverized silicon aluminum oxide contained active material;
Second step, pumping the concrete mixture by a delivery pump to an extrusion device via delivery pipeline;
Third step, extruding the concrete mixture out through an extruding opening;
Fourth step, forming constructional components of required size and shape with the extruded concrete mixture;
Fifth step, coagulating and hardening the constructional components;
   Characterized in that, between the second step of pumping and the third step of extruding, the method further comprises a step of performing electric treatment by an applied electric field to the concrete mixture, and extruding immediately the concrete mixture subjected to the electric treatment by the applied electric field through an extruding opening.

Usually, in the electric treatment step of the applied electric field, when the applied electric field is alternating current of 380 V per meter, the mixture condenses and hardens in 8 minutes, when the applied electric field is alternating current of 110 V per meter, the mixture condenses and hardens in 11 minutes, this significantly accelerated the hydration speed of cementitious materials, controlled the setting time; The mixture, which is electrically treated with an applied electric field, is extruded immediately through the extrusion port (before condensation hardening as required). Among which, the raw material of concrete contains cementitious materials, the mass content range of which is: pulverized silicone aluminum oxide contained active material 78 portion, activator calculated by Na₂O+0.658K₂O, 4 portion, water reducing agent 1 portion, retarder 1.5 portion, expansion agent 1 portion, admixture 1.2 portion. The pulverized silicon aluminum oxide contained active material refers to a pulverized material from high temperature treatment or from high temperature processing phase, with major chemical content of silicon aluminum oxide, with volcano ash activity and specific surface area over 200m2/kg, comprises mixture of granulated blast furnace slag powder, ground steel slag, fly ash, ground calcined shale.

According to the invention the activator and pulverized cementitious material containing silicon aluminum oxide active material, the specific ingredients are shown in following table:

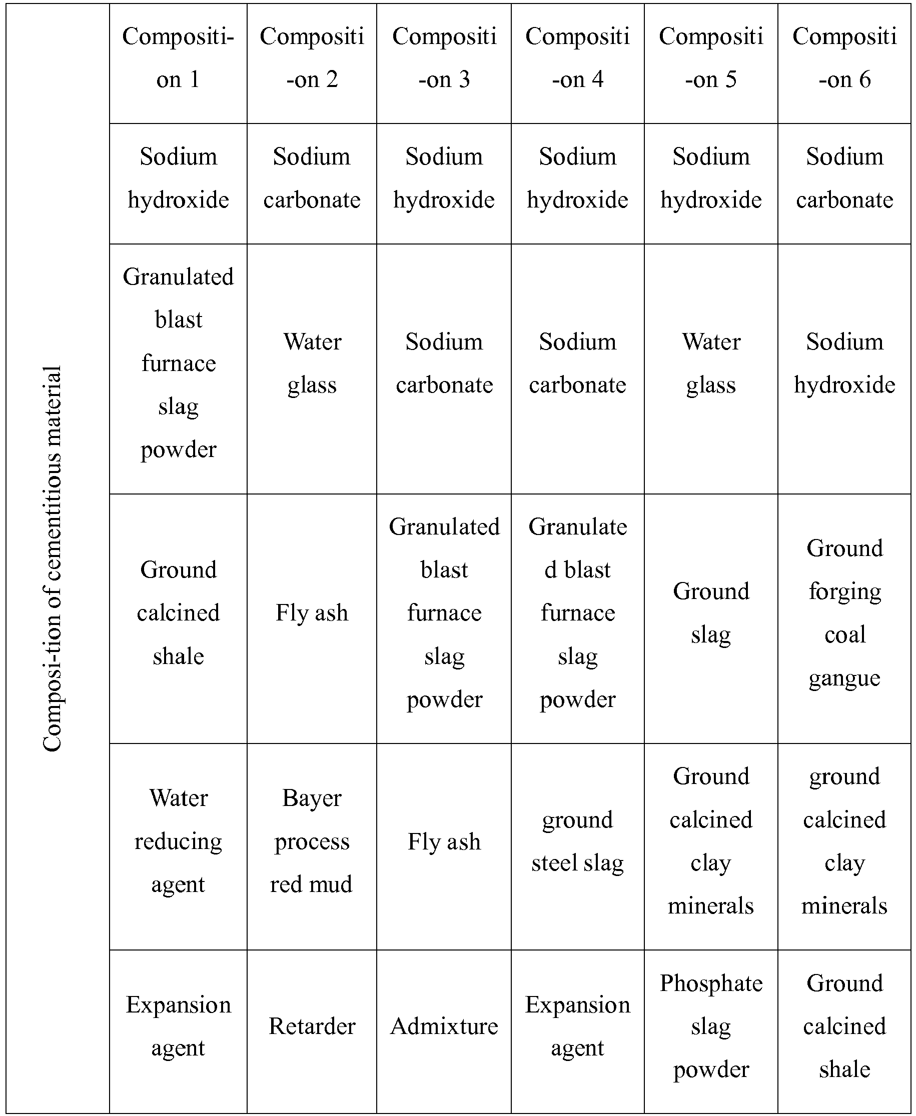

The detailed mass content range of cementitious material may also be:
1) Pulverized silicone aluminum oxide contained active material 78 portion, activator calculated by Na₂O+0.658K₂O, 4 portions, water reducing agent 1 portion, retarder 1 portion, expansion agent 1 portion, admixture 1.2 portions. The pulverized silicon aluminum oxide contained active material refers to a pulverized material from high temperature treatment or from high temperature processing phase, with major chemical content of silicon aluminum oxide, with volcano ash activity and specific surface area over 200m2/kg, comprises mixture of granulated blast furnace slag powder, ground steel slag, fly ash, ground slag, ground calcined shale.
2) Pulverized silicone aluminum oxide contained active material 60 portion, activator calculated by Na₂O+0.658K₂O, 3 portions, water reducing agent 2 portions, retarder 3 portions. The pulverized silicon aluminum oxide contained active material refers to a pulverized material from high temperature treatment or from high temperature processing phase, with major chemical content of silicon aluminum oxide, with volcano ash activity and specific surface area over 200m2/kg, comprises mixture of ground steel slag, fly ash, ground slag, ground calcined shale.
3) Pulverized silicone aluminum oxide contained active material 76 portion, activator calculated by Na₂O+0.658K₂O, 4 portions, water reducing agent 1 portion, retarder 1.5 portions, expansion agent 2 portions, admixture 1.2 portions. The pulverized silicon aluminum oxide contained active material refers to a pulverized material from high temperature treatment or from high temperature processing phase, with major chemical content of silicon aluminum oxide, with volcano ash activity and specific surface area over 200m2/kg, comprises mixture of granulated blast furnace slag powder, fly ash, ground calcined shale.
4) Pulverized silicone aluminum oxide contained active material 80 portion, activator calculated by Na₂O+0.658K₂O, 5 portions, water reducing agent 3 portion, retarder 2 portions, expansion agent 1 portion, admixture 15 portions. The pulverized silicon aluminum oxide contained active material refers to a pulverized material from high temperature treatment or from high temperature processing phase, with major chemical content of silicon aluminum oxide, with volcano ash activity and specific surface area over 200m2/kg, comprises mixture of granulated blast furnace slag powder, ground steel slag, fly ash.
5) Pulverized silicone aluminum oxide contained active material 75 portion, activator calculated by Na₂O+0.658K₂O, 6 portions, expansion agent 5 portions, admixture 10 portions. The pulverized silicon aluminum oxide contained active material refers to a pulverized material from high temperature treatment or from high temperature processing phase, with major chemical content of silicon aluminum oxide, with volcano ash activity and specific surface area over 200m2/kg, comprises mixture of granulated blast furnace slag powder, ground steel slag, ground calcined shale.

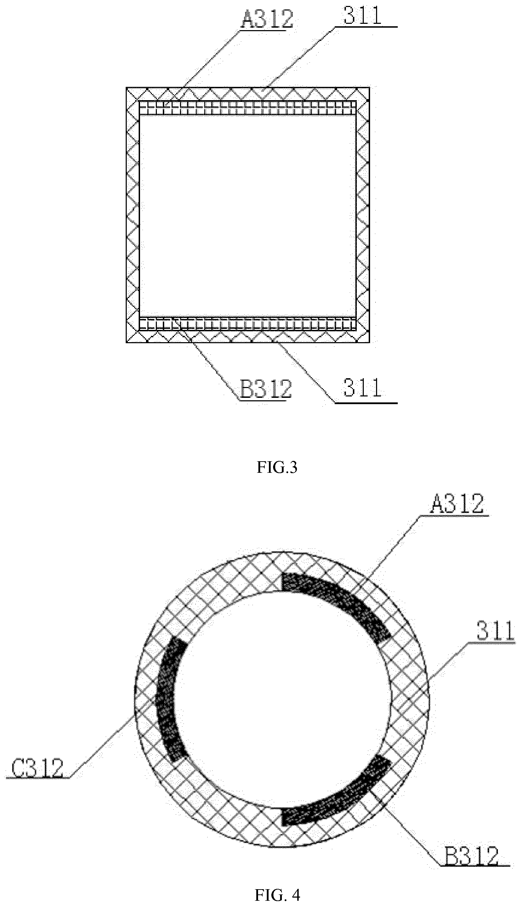

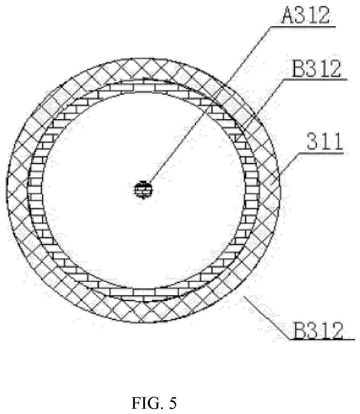

As illustrated in Fig. 2, Fig. 3, Fig. 4 and Fig. 5, the dedicated equipment of the present invention for 3D concrete printing and suitable for performing the setting time controlled concrete construction method comprises: a delivery pump 1, a delivery pipeline 2, an extrusion device 3, the extrusion device comprises an electric treatment device 31 and an extrusion port 32, the electric treatment device 31 is connected with said pipeline 2, the extrusion port 32 is located behind the electric treatment device 31. The electric treatment device 31 comprises an insulated pipe 311 and a matching electrode 312, which is contact with mixture, there is voltage difference formed after electrodes are electrified; The delivery pump is the equipment providing power to pressurize mixture, pumping and extrusion. The delivery pipeline indicates the pipe between the delivery pump and the electric treatment device that may sustain certain pressure, usually it is pressure sustained hose. The electric treatment device is used to provide applied electric field and form current to mixture passing this equipment. The extrusion port indicates opening allow extrusion of mixture after electrically treated. Above said electrodes may be as shown in Fig. 3, comprises electrodes A312 and B312, its electric field intersects with flow direction of mixture; Or it may be as shown in Fig. 4, comprises electrodes A312, B312 and C312, its electric field intersects with flow direction of mixture, at this time, it uses 3-phase power as source. It can also be as shown in Fig. 5, comprises electrodes A312 and B312, in which the electrode A312 is center electrode and B312 is circumferential electrode around the center electrode, its electric field intersects with flow direction of mixture.

The above description of detailed embodiments of the present invention is provided for understanding of the method and core concept of the present invention. For person skilled in the art, various changes and modifications can be made herein within the scope defined by the appended claims.

## Claims

1. A setting time controlled concrete construction method, including following steps:
first step, mixing raw materials of said concrete with suitable amount of water and aggregate evenly into concrete mixture, said concrete raw materials comprise at least a cementitious material comprising activator and active material;
second step, pumping the concrete mixture by a delivery pump to an extrusion device via a delivery pipeline;
third step, extruding the concrete mixture out through an extruding opening;
fourth step, forming constructional components of required size and shape with the extruded concrete mixture;
fifth step, coagulating and hardening the constructional components;
**characterized in that**:
between the second step of pumping and the third step of extruding, the method further comprises a step of performing electric treatment by an applied electric field to the concrete mixture, and extruding immediately the concrete mixture subjected to the electric treatment by the applied electric field through the extruding opening,
wherein said activator is a mixture comprising at least one or more of: sodium hydroxide, potassium hydroxide, sodium carbonate, potassium carbonate and water glass, and
wherein said active material is pulverized silicon aluminum oxide contained active material and is a pulverized material, formed from high temperature treatment or from high temperature processing phase, with major chemical content of silicon aluminum oxide, and comprising at least a mixture of one or more contents of granulated blast furnace slag powder, ground steel slag, Bayer process red mud, fly ash, ground slag, ground calcined clay minerals, phosphate slag powder, ground calcined coal gangue and ground calcined shale.

2. The setting time controlled concrete construction method of claim 1, **characterized in that**, the mass content range of the cementitious material is: pulverized silicone aluminum oxide contained active material 60-80 portions, activator calculated by Na₂O+0.658K₂O, 2-16 portions, water reducing agent 0-10 portions, retarder 0-10 portions, expansion agent 0-10 portions, admixture 0-40 portions.

3. The setting time controlled concrete construction method of claim 1, **characterized in that**, said applied electric field is AC power.

4. A dedicated equipment for 3D concrete printing and suitable for performing the setting time controlled concrete construction method according to any one of preceding claims, said equipment comprising:
- a delivery pump (1),
- a delivery pipeline (2), and
- an extrusion device (3) comprising a treatment device (31) connected with said delivery pipeline (2) and an extrusion port (32) located behind the treatment device (31),
wherein said delivery pump (1) is a device for providing power to pressurize, pump and extrude the concrete mixture; and wherein said delivery pipeline (2) is a pipe capable of sustaining certain pressure between the delivery pump and the treatment device, the equipment being **characterized in that** said treatment device (31) is an electric treatment device (31) configured to provide applied electric field and to form current to mixture passing said equipment, and said electric treatment device (31) is provided with at least one set of electrodes (A312, B312, C312) configured to connect said concrete mixture, a voltage difference is generated between electrodes (A312, B312, C312) after the electrodes are electrified; said extrusion port (32) is an opening allowing extrusion of mixture after electrically treated;
wherein said one set of electrodes in said electric treatment device comprises two electrodes (A312, B312) to form current between electrodes goings through the concrete mixture, or
wherein said one set of electrodes in said electric treatment device comprises three electrodes (A312, B312, C312) using 3 phases power as power source to form current among electrodes going through the concrete mixture.

5. The dedicated equipment of claim 4, **characterized in that**, insulated pipes (311) are provided on outer wall of said electric treatment device (31), and said electrodes (A312, B312, C312) are arranged inside the insulated pipes.

## Patentansprüche

1. Abbindezeitreguliertes Betonbauverfahren, das die folgenden Schritte umfasst:
- erster Schritt: Mischen von Rohmaterialien des Betons mit einer geeigneten Menge Wasser und Zuschlagstoff gleichmäßig in die Betonmischung, wobei die Betonrohmaterialien mindestens ein zementhaltiges Material umfassen, das einen Aktivator und aktives Material umfasst;
- zweiter Schritt: Pumpen der Betonmischung durch eine Abgabepumpe zu einer Extrusionsvorrichtung über eine Abgabeleitung;
- dritter Schritt: Extrudieren der Betonmischung durch eine Extrudieröffnung;
- vierter Schritt: Bilden von Baukomponenten erforderlicher Größe und Gestalt mit der extrudierten Betonmischung;
- fünfter Schritt: Koagulieren und Härten der Baukomponenten;
**dadurch gekennzeichnet, dass**:
• zwischen dem zweiten Schritt des Pumpens und dem dritten Schritt des Extrudierens das Verfahren ferner einen Schritt des Ausführen einer elektrischen Behandlung durch ein an die Betonungsmischung angelegtes elektrisches Feld und sofortigen Extrudierens der Betonmischung, die der elektrischen Behandlung durch das angelegte elektrische Feld unterworfen worden ist, durch die Extrudieröffnung umfasst,
• wobei der Aktivator eine Mischung ist, die mindestens eines oder mehr umfasst von: Natriumhydroxid, Kaliumhydroxid, Natriumcarbonat, Kaliumcarbonat und Wasserglas und
• wobei das aktive Material ein pulverisiertem Siliciumaluminiumoxid enthaltenes aktives Material und ein pulverisiertes Material ist, von einer Hochtemperaturbehandlungs- oder Hochtemperaturverarbeitungsphase die aus einem Hauptchemikaliengehalt von Siliciumaluminiumoxid gebildet ist erhalten ist und mindestens eine Mischung von einem oder mehreren Gehalten von granuliertem Hochofen-schlackepulver, gemahlener Stahlschlacke, Bayer-Verfahren-Rotschlacke, Flugasche, gemahlener Schlacke, gemahlenen calcinierten Tonmineralien, Phosphatschlacke-pulver, gemahlenem calciniertem Kohletaubgestein und gemahlenem calciniertem Schieferton umfasst.

2. Abbindezeitreguliertes Betonbauverfahren nach Anspruch 1, **dadurch gekennzeichnet, dass** der Massengehaltsbereich des zementhaltigen Materials Folgendes beträgt: 60-80 Portionen von in pulverisiertem Siliciumaluminiumoxid enthaltenem aktivem Material, 2-16 Portionen von als Na₂O+0,658 K₂O berechnetem Aktivator, 0-10 Portionen von Wasserreduktionsmittel, 0-10 Portionen Verzögerungsmittel, 0-10 Portionen Blähmittel, 0-40 Portionen Beimischung.

3. Abbindezeitreguliertes Betonbauverfahren nach Anspruch 1, **dadurch gekennzeichnet, dass** das angelegte elektrische Feld Wechselstrom ist.

4. Zweckbestimmtes Gerät zum 3 D-Betondrucken und das für das Ausführen des abbindezeitregulierten Betonbauverfahrens nach irgendeinem der vorhergehenden Ansprüche geeignet ist, wobei das Gerät Folgendes umfasst:
- eine Abgabepumpe (1),
- eine Abgabeleitung (2) und
- eine Extrusionsvorrichtung (3) umfassend eine Behandlungsvorrichtung (31), die mit der Abgabeleitung (2) und einer Extrusionsöffnung (32), die sich hinter der Behandlungsvorrichtung (31) befindet, verbunden ist,
wobei die Abgabepumpe (1) eine Vorrichtung zum Bereitstellen von Energie zum Unterdrucksetzen der Pumpe und Extrudieren der Betonmischung ist; und wobei die Abgabeleitungen (2) eine Leitung ist, die in der Lage ist, einen gewissen Druck zwischen der Abgabepumpe und der Behandlungsvorrichtung aufrechtzuerhalten, wobei das Gerät **dadurch gekennzeichnet ist, dass** die Behandlungsvorrichtung (31) eine elektrische Behandlungsvorrichtung (31) ist, die konfiguriert ist, um das angelegte elektrische Feld bereitzustellen und Strom für die Mischung zu bilden, die durch das Gerät hindurch geht und die elektrische Behandlungsvorrichtung (31) mit mindestens einem Satz Elektroden (A312, B312, C312) versehen ist, der zum Verbinden mit der Betonmischung konfiguriert ist, wobei ein Spannungsunterschied zwischen den Elektroden (A312, B312, C312) erzeugt wird, nachdem die Elektroden elektrisiert worden sind; wobei die Extrusionsöffnung (32) eine Öffnung ist, die die Extrusion der Mischung nach der elektrischen Behandlung gestattet;
wobei der eine Satz Elektroden in der elektrischen Behandlungsvorrichtung zwei Elektroden (A312, B312) umfasst, um Strom zwischen Elektroden, die durch die Betonmischung hindurchgegen, zu bilden oder
wobei der eine Satz Elektroden in der elektrischen Behandlungsvorrichtung drei Elektroden (A312, B312, C312) umfasst, bei denen Drehstrom als Energiequelle zum Bilden von Strom unter den Elektroden, die durch die Betonmischung hindurchgehen, verwendet wird.

5. Zweckbestimmtes Gerät nach Anspruch 4, **dadurch gekennzeichnet, dass** isolierte Leitungen (311) an der Außenwand der elektrischen Behandlungsvorrichtung (31) bereitgestellt sind und die Elektroden (A312, B312, C312) innerhalb der isolierten Leitungen angeordnet sind.

## Revendications

1. Le procédé de construction en béton à temps de prise contrôlée, comprenant les étapes suivantes:
- première étape: mélange des matières premières formant ledit béton avec une quantité convenable d'eau et d'agrégat pour obtenir un mélange homogène de béton, lesdites matières premières du béton comprenant au moins une matière à base de ciment contenant un activateur et une matière active;
- deuxième étape: pompage du mélange de béton par une pompe de distribution vers un dispositif d'extrusion par l'intermédiaire d'un tuyau de distribution ;
- troisième étape: extrusion du mélange de béton par une ouverture d'extrusion ;
- quatrième étape: formation de composants de construction de taille et forme requises à l'aide du mélange de béton extrudé ;
- cinquième étape: coagulation et durcissement des composants de construction ;
**caractérisée en ce que**:
• entre la deuxième étape de pompage et la troisième étape d'extrusion, le procédé comprend en outre une étape de mise en oeuvre d'un traitement électrique par un champ électrique appliqué au mélange de béton et d'immédiate extrusion du mélange de béton ayant été soumis au traitement électrique par un champ électrique appliqué par une ouverture d'extrusion,
• dans laquelle ledit activateur est un mélange comprenant au moins un ou plusieurs des composés suivants: hydroxyde de sodium, hydroxyde de potassium, carbonate de sodium, carbonate de potassium et verre soluble, et
• dans laquelle ladite matière active est une matière active réduite en poudre de type oxyde de silicium-aluminium et est un matériau réduit en poudre issu d'un traitement à haute température ou d'une phase de traitement à haute température, ayant une teneur chimique majeure en oxyde de silicium-aluminium, et comprenant au moins un mélange constitué d'une ou de plusieurs quantités de poudre granulée de laitier de haut-fourneau, de scories d'acier broyé, boues rouges de procédé Bayer, cendres volantes, laitier broyé, minéraux argileux calcinés broyés, poudre de scories phosphatées, gangue de charbon calcinée et broyée et schiste calciné broyé.

2. Le procédé de construction en béton à temps de prise contrôlée selon la revendication 1, **caractérisée en ce que** la plage des teneurs en poids du matériau à base de ciment est la suivante: 60-80 parties d'un matériau actif à base d'oxyde de silicium-aluminium réduit en poudre, 2-16 parties d'un activateur calculé comme présentant la formule Na₂O+0,658K₂O, 0-10 parties d'agent déshydratant, 0-10 parties de retardateur, 0-10 parties d'agent d'expansion, 0-40 parties d' additifs.

3. Le procédé de construction en béton à temps de prise contrôlé selon la revendication 1, **caractérisée en ce que** ledit champ électrique appliqué est un courant alternatif..

4. Équipement dédié pour l'impression 3D de béton se prêtant à la mise en oeuvre de la procédé de construction en béton à temps de prise contrôlé selon l'une quelconque des revendications précédentes, ledit équipement comprenant:
- une pompe de distribution (1),
- un tuyau de distribution (2), et
- un dispositif d'extrusion (3) comprenant un dispositif de traitement (31) raccordé audit tuyau de distribution (2) et un orifice d'extrusion (32) situé derrière le dispositif de traitement (31),
dans lequel:
• ladite pompe de distribution (1) est un dispositif servant à fournir l'énergie pour mettre sous pression, pomper et extruder le mélange de béton ; et dans lequel ledit tuyau de distribution (2) est un tuyau capable de supporter une certaine pression entre la pompe de distribution et le dispositif de traitement, l'équipement étant **caractérisé en ce que** ledit dispositif de traitement (31) est un dispositif de traitement électrique (31) conçu pour créer un champ électrique appliqué et pour faire passer un courant dans le mélange transitant par ledit équipement, et ledit dispositif de traitement électrique (31) est pourvu d'au moins un jeu d'électrodes (A312, B312, C312) conçues pour connecter ledit mélange de béton, une différence de tension est générée entre les électrodes (A312, B312, C312) après que les électrodes sont électrifiées ; ledit orifice d'extrusion (32) est une ouverture permettant l'extrusion du mélange après son traitement électrique ;
• dans lequel ledit jeu d'électrodes dans ledit dispositif de traitement électrique comprend deux électrodes (A312, B312) pour générer un courant entre les électrodes lequel circule dans le mélange de béton, ou
• dans lequel ledit jeu d'électrodes dans ledit dispositif de traitement électrique comprend trois électrodes (A312, B312, C312) utilisant un courant triphasé comme source d'alimentation pour générer un courant entre les électrodes, lequel circule dans le mélange de béton.

5. Équipement dédié selon la revendication 4, **caractérisé en ce que** des tuyaux isolés (311) sont fournis sur une paroi extérieure dudit dispositif de traitement électrique (31), et lesdites électrodes (A312, B312, C312) sont agencées à l'intérieur des tuyaux isolés.
